**Europäisches Patentamt**

**European Patent Office**

**Office européen des brevets**

(19)

(11) Veröffentlichungsnummer: **0 284 927 B1**

(12) ## EUROPÄISCHE PATENTSCHRIFT

(45) Veröffentlichungstag der Patentschrift: **15.07.92**

(51) Int. Cl.⁵: **H01G 1/11**

(21) Anmeldenummer: **88104369.9**

(22) Anmeldetag: **18.03.88**

(54) **Elektrischer Kondensator.**

(30) Priorität: **19.03.87 DE 3709043**

(43) Veröffentlichungstag der Anmeldung:
**05.10.88 Patentblatt 88/40**

(45) Bekanntmachung des Hinweises auf die
Patenterteilung:
**15.07.92 Patentblatt 92/29**

(84) Benannte Vertragsstaaten:
**DE FR GB IT SE**

(56) Entgegenhaltungen:
**DE-A- 2 220 022**
**GB-A- 2 106 715**

(73) Patentinhaber: **SIEMENS AKTIENGESELL-
SCHAFT**
**Wittelsbacherplatz 2**
**W-8000 München 2(DE)**

(72) Erfinder: **Erhardt, Werner, Dipl.-Ing.(FH)**
**Triebweg 4**
**W-7901 Ballendorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen elektrischen Kondensator, insbesondere Leistungskondensator, der in ein Gehäuse mit einer Überdruckabreißsicherung eingebaut ist, welche aus einem im Gehäuseinneren angeordneten Stromleiter besteht, der eine Soll-Abreißstelle verminderten Querschnitts besitzt.

Bei Kondensatoren, insbesondere bei Leistungskondensatoren, deren Elektroden durch regenierfähige Metallschichten gebildet werden, und die mit einem flüssigem Imprägniermittel getränkt sind, können beim Betrieb durch Selbstheilprozesse gasförmige Zersetzungsprodukte gebildet werden. Dies kann zu einer erheblichen Druckerhöhung im Inneren des Gehäuses führen, wobei diese starke Druckerhöhung im übrigen auch am Ende der Lebensdauer des Kondensators auftreten kann. Damit durch die geschilderte Druckerhöhung das Gehäuse nicht explosionsförmig zerstört wird, sind Überdruckabreißsicherungen üblich, welche den Kondensator bei einer stärkeren Druckerhöhung abschalten.

So ist aus der DE-PS 28 25 377 ein elektrischer Kondensator mit den Merkmalen des Oberbegriffs des Patentanspruchs 1 bekannt, bei dem die Abschaltsicherung aus einem rohrförmigen elektrischen Stromleiter besteht, der eine durch Materialabtrag erzeugte Querschnittsverengung aufweist.

Weiterhin ist es aus der DE-OS 30 47 876 bekannt, als Abschaltvorrichtung einen mit einer Sollbruchstelle versehenen Abreißdraht zu verwenden.

Die angeführten Abreißsicherungen zeichnen sich dadurch aus, daß sie starr sind und im Bereich der Soll-Abreißstellen vor und während der Montage leicht knicken und brechen können. Es ist deshalb erforderlich, die Abreißstellen durch Schutzhülsen vor Transport- und Montagebeschädigungen zu schützen. Weiterhin können starre Abschaltsicherungen auch bei Vibrationsbelastungen des Kondensators zu einem Bruch der Soll-Abreißstelle führen, wodurch der Kondensator abgeschaltet wird, obgleich keine schädliche Druckerhöhung vorliegt.

Aufgabe der Erfindung ist es daher, einen elektrischen Kondensator der eingangs genannten Art zu schaffen, dessen Abschaltvorrichtung sich durch eine wesentlich verbesserte Bruchunempfindlichkeit vor und während der Montage sowie durch bessere Belastbarkeit durch Vibrationen nach erfolgten Einbau auszeichnet.

Diese Aufgabe wird erfindungsgemäß dadurch gelöst, daß der Stromleiter aus einer flexiblen Litze besteht, die im Bereich der Soll-Abreißstelle einen begrenzten, formstabilen Bereich aufweist.

Vorzugsweise besteht der Stromleiter aus Kupfer oder einer Kupfer-Legierung.

Die Erfindung wird anhand der folgenden Ausführungsbeispiele erläutert.

In der dazugehörenden Zeichnung zeigen

FIG 1     eine Abreißsicherung mit den Merkmalen gemäß der Erfindung,

FIG 2     eine Seitenansicht der Abreißsicherung nach FIG 1 und

FIG 3     einen Ausschnitt eines Kondensators mit Überdruckabreißsicherung.

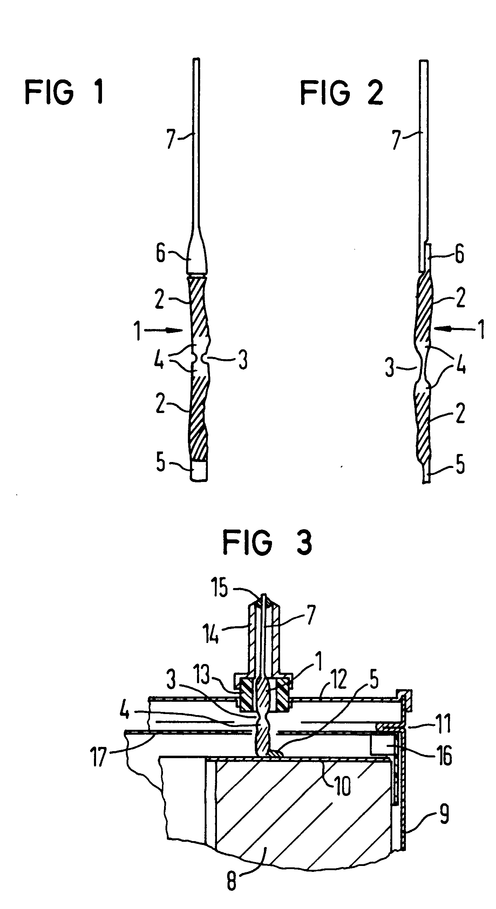

In der FIG 1 ist ein Stromleiter 1 dargestellt, der aus einer flexiblen Litze 2 besteht, die im Bereich der Soll-Abreißstelle 3 einen begrenzten, formstabilen Bereich 4 besitzt. An den Enden besitzt die Litze 2 flachgedrückte Bereiche 5, 6, die einerseits - Bereich 5 - beispielsweise zum Anlöten an einen Kondensatorwickel und andererseits - Bereich 6 - zum Anbringen eines Zuleitungsdrahtes 7 dienen.

In der FIG 2 ist eine Seitenansicht des Stromleiters 1 dargestellt, aus der die Verengung im formstabilen Litzenbereich 4 ersichtlich ist. Dieser formstabile, begrenzte Bereich 4 im Bereich der Soll-Abreißstelle 3 wird beispielsweise durch eine Ultraschall-Verdichtung hergestellt, wobei anschließend die Abreißstelle 3 definiert ausgestanzt wird.

Der begrenzte, formstabile Bereich 4 ist für die genaue mäßliche Einhaltung des Abreiß-Restquerschnitts im Bereich der Soll-Abreißstelle 3 notwendig.

In der FIG 3 ist ausschnittsweise dargestellt, wie ein Kondensatorwinkel in eine Gehäuse 9 eingebaut ist. Der Kondensatorwickel 8 besitzt an seiner Stirnseite eine Schoopschicht 10, an die das flachgedrückte Ende 5 des Stromleiters 1 angelötet ist. Der Draht 7, welcher am Stromleiter 1 angebracht ist, ist mit einer äußeren Stromzuführung 14 an der Stelle 15 dicht verlötet. Zur Isolation gegenüber dem Deckel 12, der das Gehäuse 9 verschließt, ist ein Isolator 13 als Durchführung angeordnet. Der Wickel 8 ist im Gehäuse 9 durch einen Einlegring 16 und eine Abschlußscheibe 17 mit Hilfe der Faltsicke 11 festgelegt.

Bei Druckerhöhung im Inneren des Gehäuses 9 wird die Sicke 11 aufgebogen, wodurch der Abstand zwischen Deckel 12 und Kondensatorwickel 8 erhöht wird, so daß die Abreißsicherung 1 an der vorgesehenen Soll-Abreißstelle 3 aufgetrennt wird.

Die Abreißstelle 3 ist im eingebauten Zustand gegenüber Schüttel- und Stoßbeanspruchungen fast vollkommen entlastet, da die Erschütterungen im flexiblen Teil der Litze 2 absorbiert werden. Dies ist insbesondere von Bedeutung bei elektrischen Anschlußleitungen, denen nur eine sehr kurze Einbaulänge zur Verfügung steht.

Bei Verwendung der gebräuchlichen Abreißsicherungen wirkt sich die kurze starre "Einspannlänge" bei Vibrationsbelastungen auf die Abreißstelle sehr ungünstig aus.

**Patentansprüche**

1. Elektrischer Kondensator (8), insbesondere Leistungskondensator, der in ein Gehäuse (9) mit einer Überdruckabreißsicherung eingebaut ist, welche aus einem im Gehäuseinneren angeordneten Stromleiter (1) besteht, der eine Soll-Abreißstelle (3) verminderten Querschnitts besitzt, **dadurch gekennzeichnet, daß** der Stromleiter (1) aus einer flexiblen Litze (2) besteht, die im Bereich der Soll-Abreißstelle (3) einen begrenzten, formstabilen Bereich (4) aufweist.

2. Elektrischer Kondensator nach Anspruch 1, **dadurch gekennzeichnet, daß** der Stromleiter (1) aus Kupfer oder einer Kupfer-Legierung besteht.

**Claims**

1. Electrical capacitor (8), preferably a power capacitor, which is installed in a container (9) having an internal overpressure disconnector which consists of a conductor (1) which is arranged in the container interior and has a design disconnection point (3) of reduced cross-section, characterised in that the conductor (1) consists of a flexible litz wire (2) which has a restricted, dimensionally stable region (4) in the region of the design disconnection point (3).

2. Electrical capacitor according to Claim 1, characterised in that the conductor (1) consists of copper or of a copper alloy.

**Revendications**

1. Condensateur électrique (8), notamment condensateur de puissance, qui est monté dans un boîtier (9) comportant un système de sécurité contre une rupture sous l'effet d'une surpression, qui est constitué par un conducteur (1) disposé à l'intérieur du boîtier et possédant un point de rupture de consigne (3) de section transversale réduite, caractérisé par le fait que le conducteur (1) est constitué par une tresse flexible (2), qui possède une zone limitée de forme stable (4) au niveau de la zone de rupture de consigne (3).

2. Condensateur électrique suivant la revendication 1, caractérisé par le fait que le conducteur (1) est réalisé en cuivre ou en un alliage de cuivre.

EP 0 284 927 B1

FIG 1    FIG 2

FIG 3